# FASCICULE DE BREVET EUROPEEN

(11) **EP 3 206 779 B1**
(45) Date de publication et mention de la délivrance du brevet: **12.08.2020**
(21) Numéro de dépôt: 15787266.4
(22) Date de dépôt: 14.10.2015
(51) Int. Cl.: B01F 17/00, C08K 5/14

(54) **EMULSION AQUEUSE DE PEROXYDE DE DIALKYLE**
WÄSSRIGE EMULSION VON DIALKYLPEROXID
AQUEOUS EMULSION OF DIALKYL PEROXIDE

(30) Priorité: 17.10.2014 FR 1459972
(43) Date de publication de la demande: 23.08.2017
(73) Titulaire: Arkema France, 92700 Colombes (FR)
(72) Inventeur: TARTARIN, Isabelle, F-69600 Oullins (FR); COCHET, Jacques, F-38150 Chanas (FR); LOHR, Juergen, 89312 Günzburg (DE)
(74) Mandataire: Gorintin, Sarah
(86) Numéro de dépôt international: PCT/FR2015/052758
(87) Numéro de publication internationale: WO 2016/059342

(56) Documents cités:
- WO-A1-00/42078
- WO-A1-2014/044949
- WO-A2-2011/015567
- GB-A- 2 073 046
- JP-A- 2001 064 312

## Description

### Domaine de l'invention

L'invention a pour objet une émulsion aqueuse de peroxyde de dialkyle, stockée à température ambiante, comportant un agent émulsifiant spécifique, à savoir un émulsifiant non ionique polyéthoxylé, et plus particulièrement au moins un ester de sorbitan.

La présente invention se rapporte également au procédé de préparation d'une telle émulsion ainsi qu'à l'utilisation de cette émulsion dans des applications à laquelle elle est particulièrement destinée.

### Etat de l'art

Les peroxydes organiques sont des espèces très instables lorsqu'elles sont chauffées. En cas d'élévation incontrôlée de la température, certains peroxydes organiques risquent de s'enflammer ou d'exploser de manière violente. Ce comportement est donc incompatible notamment avec les règles en vigueur pour le transport et le stockage de matière dangereuse.

Les peroxydes organiques doivent donc être mis dans un solvant (phlegmatisant) ou en suspension/émulsion dans l'eau pour pouvoir être transportés (émulsion huile dans eau). La présence de phlegmatisant (solvant, eau) atténue grandement la violence de la décomposition.

Par ailleurs l'intérêt majeur des émulsions/suspensions de peroxydes organiques dans l'eau réside dans le fait qu'en cas de décomposition, celle-ci se fera sans risque majeur d'incendie car l'eau constitue une puissante réserve d'absorption des calories tandis qu'un phlegmatisant (uniquement solvant, sans présence d'eau) pourra prendre feu.

Les émulsions de peroxydes organiques liquides dans l'eau se sont développées essentiellement pour les peroxydes qui doivent être stockés à basse température. On retrouvera en particulier les peroxydicarbonates, certains peroxyesters et les diacyles.

L'application principale de ces peroxydes très réactifs vis-à-vis du critère de température, classiquement sous forme d'émulsion, est la polymérisation ou la copolymérisation de monomères éthyléniquement insaturés, notamment du chlorure de vinyle.

Lorsque les peroxydes organiques ont une température de décomposition autoaccélérée (SADT) bien au dessus de la température ambiante, l'intérêt de la forme phlegmatisée (de type solvant ou eau) peut résider également dans le gain au stockage en termes de quantité de peroxyde organique par changement de classe de stockage selon les réglementations nationales en vigueur. Cela peut permettre de conserver dans l'unité de production une quantité de peroxyde organique plus importante que lorsque le peroxyde est phlegmatisé.

Ainsi, par exemple, le peroxyde de 2,5-diméthyle-2,5-di(tert-butylperoxyhexane) à l'état pur est classé UN3103, soit de type C alors que dilué à 50% massique dans une huile minérale, il devient classé UN3109 soit de type F (classification UN « Transport of dangerous goods » relative aux peroxydes). Dans la réglementation hollandaise de stockage des peroxydes organiques, dite VROM, il est possible de stocker dans les équipements de dosage 5000 litres d'un peroxyde de type F ou 100 litres d'un peroxyde de type C.

Cet avantage logistique est donc lié à l'amélioration de la sécurité du peroxyde organique par la présence du phlegmatisant (solvant ou eau).

Or, dans certaines applications, la présence d'un solvant (dans le cas d'un phlegmatisant de type huile) peut présenter pendant l'utilisation certains inconvénients tels que l'exsudation, en particulier lorsque le peroxyde est utilisé en extrusion à haute température ou une exsudation potentielle (« fogging ») lors de l'utilisation du polymère dans lequel le peroxyde organique est ajouté.

Cette émulsion doit rester stable sans séparation de phase pendant au moins deux mois de stockage à température ambiante.

A l'heure actuelle, il n'existe pas sur le marché d'émulsion aqueuse à base de peroxyde de dialkyle permettant d'assurer une sécurité optimale pour les peroxydes de ce type et qui soit apte au stockage industriel, à savoir sans séparation de phases sur une période relativement longue (délai minimum de deux mois).

Dans l'état de la technique, on connaît par le document US 3988261 des émulsions aqueuses gelées de peroxydes qui doivent être stockés à froid, tels que les peresters ou les peroxydicarbonates, mais l'enseignement de ce brevet ne concerne pas les peroxydes de dialkyles qui sont des peroxydes de nature différente.

Des émulsions de peroxydes de dialkyles sont envisagées dans le document US 4440885 mais l'état physique du peroxyde est solide, celui-ci est alors mis en solution dans un solvant approprié avant d'être mis en émulsion dans l'eau. Ce document décrit l'utilisation de trois émulsifiants de HLB (« Hydrophile Lipophile Balance » ou balance hydrophile-lipophile) global (HLB de l'émulsion et non pas des différents composants) compris entre 9 et 20 mais ces compositions ne sont pas stables au-delà d'une semaine (déphasage de l'émulsion). Par ailleurs, ce solvant engendre des problèmes d'exsudation au dessus des extrudeuses, comme mentionné précédemment.

Le document GB 2073046 divulgue des émulsions aqueuses de peroxyde comprenant du 2,5-diméthyle-2,5-di(tert-butylperoxy)-hexane et un mélange de trois émulsifiants consistant en un triméthyl nonyl éther de polyéthylène glycol, un nonyl phénoxy polyethylèneoxy éthanol et un condensat d'oxyde de propylène avec des bases hydrophiles formées par la condensation d'oxyde d'éthylène avec de l'éthylène glycol. Ce document ne mentionne qu'un stockage de trois jours à une semaine.

Le document US 7943685 décrit une application très particulière où un latex d'élastomère et d'un peroxyde organique de type dialkyle est produit, un émulsifiant de type ionique (sodium lauryl sulfate) et des additifs propres à la réticulation des élastomères, méthyle oléate sulfate, deux mercaptoluimidazoles de zinc sont utilisés. Dans ce document, le latex est réalisé juste avant l'utilisation donc la notion de stabilité sans déphasage de plusieurs mois n'est ici pas un critère considéré.

Le document WO 00/42078 divulgue des compositions d'émulsions de peroxydes organiques incluant donc les peroxydes de dialkyle en présence de copolymère d'acide dicarboxylique α, β insaturés partiellement éthoxylés sur la fonction acide carboxylique et d'à oléfine de C₈ à C₂₄ et d'alcool gras éthoxylés. Les exemples cités dans ce document illustrent les compositions à base de peroxydicarbonates ou de peresters. Or la structure des peroxydes de dialkyle étant intrinsèquement moins polaire que celle des peresters ou des percarbonates, il n'est pas possible à l'homme du métier d'extrapoler ces résultats aux peroxydes de dialkyle.

Le document WO 01/32613 revendique quant à lui la réalisation d'émulsion de différents peroxydes organiques par la synthèse directe en émulsion du peroxyde concerné. Les halogénures correspondant sont mis en émulsion. Les exemples donnés ne traitent pas de peroxydes de dialkyle mais de peroxydes typiquement utilisés pour la fabrication de PVC (peresters, peroxydicarbonates, diacyles). Les émulsifiants utilisés dans ce cas sont à base de PVA partiellement hydrolysé, d'éthers d'alkyl cellulose (type méthyle cellulose ou hydroxypropyle cellulose), de la gélatine, de la polyvinylpyrrolidone, du monoolaurate de sorbitan polyéthoxylé, de l'acide polyacrylique.

Le document WO 2011/015567 divulgue la composition d'une émulsion aqueuse d'un peroxyde de taux d'oxygène actif supérieur ou égal à 7% en poids. Les exemples de ce document décrivent uniquement le cas d'un peroxyde de diacyle particulier, le peroxyde de diisobutyryle qui est le seul peroxyde présent dans les exemples. L'objet de ce document consiste à sécuriser le transport de peroxydes organiques se décomposant rapidement, ce qui n'est pas une problématique identique à la stabilisation dans le long terme (plusieurs mois) d'une émulsion aqueuse ab initio transportable, c'est-à-dire non dangereuse. L'objet de ce document consiste à développer une émulsion pour un peroxyde organique intrinsèquement hautement instable et qui ne pourrait pas être transporté à l'état pur mais uniquement dilué (solvant ou émulsion aqueuse), ce qui n'est pas le cas de tous les peroxydes décrits dans ce document puisqu'en particulier il est connu que bon nombre de peroxydes de dialkyle, bien qu'ayant un taux d'oxygène actif élevé et supérieur à 7% en poids, peuvent être transportés à l'état pur. Comme cela a été évoqué précédemment, l'avantage d'une émulsion de tels peroxydes de dialkyle réside dans des conditions d'utilisation et/ou de stockage plus favorables qu'un produit pur et/ou dilué en solvant. La problématique réside donc ici dans la recherche d'une composition de peroxyde de dialkyle stable au stockage à température ambiante (pas de séparation de phase pendant au moins deux mois).

Le peroxyde de diisobutyryle se met impérativement en émulsion à basse température selon les exemples cités dans WO 2011/015567 et se conserve aussi à basse température (inférieure à 0°C, plus précisément à -25°C/-30°C dans les deux exemples). Or l'homme du métier sait parfaitement que la température est un paramètre clef dans la stabilisation/déstabilisation d'une émulsion. Comme indiqué dans le document « Techniques de l'Ingénieur - Procédés d'émulsification - Mécanisme de formation des émulsions » de JP Canselier et M Poux, document J2-152, publié le 10 juin 2014, plus précisément au paragraphe 1.3.3, ainsi que dans l'exemple 1 de WO 2011/015567 où une augmentation de température à 35°C déstabilise l'émulsion, une élévation de température va influencer la solubilité de l'émulsifiant dans l'eau, donc sa concentration résiduelle dans la phase continue et de ce fait va influencer la tension de surface de la zone interfaciale.

Par ailleurs l'agitation thermique et le mouvement brownien sont plus élevés à température positive que négative donc la rencontre entre les gouttelettes est facilitée de sorte que la stabilité de l'émulsion sera diminuée. Il est également important de noter l'influence de la viscosité des phases en présence et de l'émulsion elle-même sur la qualité de l'émulsion et sur sa stabilité, or une augmentation de température tendra à diminuer sa viscosité donc potentiellement les phénomènes de crémage et floculation pourront être accélérés. De ce fait l'enseignement existant pour des émulsions non gelées de peroxyde organique stockées à température négative est difficilement extrapolable à des émulsions de peroxyde organique et notamment de peroxyde de dialkyle stockées à température ambiante.

En outre, on notera que le peroxyde de diisobutyryle est un composé significativement plus polaire que les peroxydes de dialkyle car il contient, en plus de la liaison peroxydique (liaison oxygène - oxygène), des groupements polaires de type carbonyles (acyles). Or, l'homme du métier sait que la réalisation d'une émulsion huile dans eau d'un composé organique moins polaire (ici le peroxyde de dialkyle) demandera une énergie plus importante ou des surfactants particulièrement efficaces pour diminuer suffisamment la tension interfaciale entre le milieu aqueux et la phase organique pour obtenir des tailles de gouttelettes suffisamment fines et stables dans le temps de stockage.

Enfin, la particularité de cette émulsion de WO 2011/015567 tient au fait que le peroxyde organique, trop dangereux à l'état pur, est préalablement phlegmatisé dans un solvant puis mis en émulsion. La composition de cette émulsion est quant à elle très proche de ce qui est décrit dans le document WO 03/095500.

On connaît également le document JP 2001064312 qui divulgue également une émulsion de peroxydes polaires stables dans des conditions de températures froides (-15°C). Les cinq émulsions présentées dans les exemples de ce document comportent toutes systématiquement un antigel, un colloïde protecteur (plus précisément un acétate de polyvinyle PVA) et un émulsifiant. Par ailleurs, les trois peroxydes des exemples - tert-butyl peroxy isbutyrate (Kayaester O), di-(3,5,5-trimethylhexanoyl)-peroxyde (Trigonox 36) et di-2-ethylhexyl peroxydicarbonate (Kayacarbon EH) - présentent tous des groupements polaires de type carbonyle (acyle, ester et/ou carbonate) en plus de la liaison peroxyde oxygène-oxygène.

### Brève description de l'invention

Il a été constaté que les agents de suspension de type acétate de polyvinyle partiellement hydrolysés ou les dérivés cellulosiques ne permettent pas, lorsqu'ils sont utilisés seuls, de conserver les peroxydes de dialkyle en émulsion aqueuse dans un stockage industriel (non démixtion de phase pendant au moins deux mois).

De tels agents de suspension sont pourtant souvent utilisés en revanche pour la stabilité d'émulsion de peroxydicarbonates, de diacyles ou de peresters stockés à froid.

La demanderesse a ainsi découvert, après diverses expériences et manipulations, qu'il est nécessaire d'utiliser un tensioactif non ionique polyéthoxylé mais que la nature de cet émulsifiant non ionique importe de sorte que les objectifs de l'invention ne sont pas atteints avec tous types d'émulsifiants non ioniques. Ainsi, lorsqu'utilisé seul (un unique agent émulsifiant est utilisé), les émulsifiants non ioniques de type acétate de polyvinyle partiellement hydrolysé et/ou dérivé cellulose (les celluloses pures ne peuvent être utilisées comme émulsifiant, en particulier pour ce type de peroxyde) n'entrent pas dans le cadre de la présente invention.

La demanderesse se réfère, pour définir ce qui doit être entendu par l'expression « tensioactif non ionique », à l'article intitulé « tensioactifs » de 1995 par Chantai Larpent, aux éditions « les techniques de l'ingénieurs ».

Ainsi, la présente invention concerne une émulsion aqueuse de peroxyde de dialkyle consistant en :
- au moins un peroxyde de dialkyle sous forme liquide à température ambiante, représentant entre 10% et 75% en poids de l'émulsion,
- au moins un agent émulsifiant représentant de 0,01 % à 10% en poids de l'émulsion,
- de façon optionnelle, au moins un agent antigel,
- éventuellement au moins un additif fonctionnel,
- de l'eau dont la quantité est déterminée de manière à former le reste de ladite émulsion (100%), caractérisée en ce que l'agent émulsifiant est un tensioactif non ionique polyéthoxylé choisi parmi les esters d'acides carboxyliques éthoxylés, les amides éthoxylés, les aminés grasses éthoxylées, les huiles animales, hydrogénées ou non, éthoxylées, les huiles végétales, hydrogénées ou non, éthoxylées, de préférence une huile de ricin comportant de 10 à 20 moles d'oxyde d'éthylène, ou en un mélange d'une telle huile éthoxylée avec un ester de sorbitan, lui-même éthoxylé ou non, les esters de sorbitan éthoxylés, les esters de glycérol éthoxylés, un mélange d'au moins deux esters de sorbitan dont l'un est un ester de sorbitan éthoxylé.

Il est entendu ici que le peroxyde de dialkyle se présente sous forme liquide à la « température ambiante », soit une température comprise entre 10°C et 30°C (Celsius), préférentiellement entre 15°C et 25°C.

Par l'expression « tensioactif non ionique éthoxylé », l'émulsion aqueuse selon l'invention entend exclure les acétates de polyvinyle (PVA) partiellement hydrolysés, classiquement utilisés à l'heure actuelle pour certaines émulsions aqueuses (à base de peroxydicarbonates, peroxyesters et/ou peroxyde de diacyles), et les dérivés celluloses du tensioactif non ionique utilisable pour satisfaire aux critères de l'invention car la demanderesse a montré que pour ces surfactants, utilisés seuls, les émulsions ne satisfont pas le critère essentiel de stockage industriel, autrement dit l'émulsion contenant de tels composants déphase dans un délai inférieur à deux mois. En revanche leur utilisation en tant qu'additif de l'émulsion n'est pas exclue des bornes de cette invention, notamment pour ajuster la viscosité de l'émulsion et en particulier lorsqu'on veut la rendre moins fluide.

On entend par « acétates de polyvinyle » partiellement hydrolysés tous les dérivés ou composants comportant au moins une fonction d'acétate de polyvinyle ou étant compris dans la famille des acétates de polyvinyle, et ayant un degré d'hydrolyse supérieur ou égal à 10% en mole et une viscosité à 20-23°C, comme classiquement mesurée par l'homme du métier (soit à 4% en solution aqueuse dans l'eau ou en viscosimétrie Brookfield RVT 3/20), supérieure ou égale à 1 mPas. Ces acétates de polyvinyle partiellement hydrolysés pourront être choisis parmi des copolymères à blocs ou statistiques.

On entend par « dérivés celluloses » les composants dérivés de cellulose connus de l'homme du métier. Ainsi, les dérivés de cellulose sont classés en fonction du type de traitement chimique en acétate de cellulose, les principales familles de dérivés de la cellulose étant les éthers de cellulose et les esters de cellulose.

A titre d'exemple de tels dérivés celluloses, on citera le méthyle cellulose (MC), le l'hydroxyéthyle cellulose (HEC), le carboxyméthyle cellulose (CMC) et le méthylhydroxy propyl cellulose (MHPC).

Selon un aspect particulièrement intéressant, l'émulsion aqueuse selon l'invention présente une SADT (« Self Accelerating Decomposition Température ») supérieure ou égale à 50°C, de préférence supérieure ou égale à 60°C.

Il a été montré que le HLB (balance hydrophile-lipophile) global de l'émulsifiant doit être compris entre 5 et 14, préférentiellement entre 7 et 12, encore plus préférentiellement entre 9 et 10.

On notera que l'antigel sera utilisé lorsque l'émulsion aqueuse est destinée à être stockée à froid, classiquement dans un environnement dont les températures sont inférieures à 0°C. L'antigel sert alors classiquement à éviter la formation de gels.

Il est important de noter que, sur un plan industriel, l'intérêt de développer une émulsion stable de peroxydes dialkyle au moins deux mois durant un stockage à température ambiante est très grand. On entend ici par stabilité de l'émulsion la présence d'une seule phase d'aspect laiteux sans présence d'une phase organique pure (taux de pureté supérieur à 60%), qui ferait perdre à l'émulsion de son intérêt notamment vis-à-vis de sa sécurité au stockage.

D'autres caractéristiques et particularités du mélange primaire de l'invention sont présentées ci-après :
- de préférence, l'agent émulsifiant consiste en au moins un ester de sorbitan éthoxylé;
- avantageusement, l'agent émulsifiant consiste en un mélange d'au moins deux esters de sorbitan, dont l'un est un ester de sorbitan éthoxylé ;
- selon une possibilité offerte par l'invention, l'agent émulsifiant consiste en une huile végétale éthoxylée, de préférence une huile de ricin comportant de 10 à 20 moles d'oxyde d'éthylène, ou en un mélange d'une telle huile éthoxylée avec un ester de sorbitan, lui-même éthoxylé ou non ;
- le peroxyde de dialkyle représente plus de 40% en poids de l'émulsion, de préférence entre 55% et 65% en poids de ladite émulsion ;
- avantageusement, l'agent émulsifiant représente entre 1% et 3% en poids de l'émulsion ;
- de préférence, le peroxyde de dialkyle consiste en le 2,5-diméthyle-2,5-di(tert-butylperoxy)-hexane ;
- dans le cas où l'agent émulsifiant consiste en au moins un ester de sorbitan, ledit ester de sorbitan consiste en un sorbitan de mono laurate, mono ou tri oléate, mono ou tristéarate et leurs structures éthoxylées ;
- également dans ce dernier cas, l'ester de sorbitan éthoxylé présente un degré d'éthoxylation inférieur ou égal à 20 moles d'oxyde d'éthylène.

L'invention se rapporte également à un procédé de préparation de l'émulsion aqueuse selon l'une quelconque des revendications précédentes, caractérisé en ce qu'il comprend les étapes de :
- dispersion et homogénéisation dans l'eau de l'agent émulsifiant, puis
- ajout du peroxyde de dialkyle dans l'émulsion aqueuse, puis
- le mélange ainsi constitué est émulsionné au cours d'une étape d'émulsion à température inférieure à 30°C, préférentiellement à une température comprise entre 18°C et 25°C.

On entend par le terme «émulsionné» le fait d'agiter ou mélanger, de préférence à l'aide d'un agitateur tournant à au moins 2000 tpm (« tour par minute ») voire plus de 5000 tpm, le milieu réactionnel ou le milieu d'introduction des différents composants formant l'émulsion selon l'invention.

L'invention concerne aussi une utilisation de l'émulsion aqueuse telle que mentionnée ci-dessus, pour :
- la réticulation d'élastomères, ou
- la polymérisation de dérivés d'éthylène ou de monomères acryliques seuls ou avec d'autres monomères.

En effet, il n'est pas exclu d'utiliser le peroxyde de dialkyle tel que décrit dans la présente invention dans des applications de polymérisation de dérivés d'éthylène ou de monomères acryliques seuls ou avec d'autres monomères, lorsque la présence d'eau n'est pas rédhibitoire à la polymérisation.

La description qui va suivre est donnée uniquement à titre illustratif et non limitatif.

### Description détaillée de l'invention

S'agissant du peroxyde de dialkyle, il se présente sous les formes brutes classiques suivantes :

**R-O-O-R**

ou

**R-O-O-R-R'-O-O-R'**

Ainsi, les ramifications R ou R' peuvent consister en des composants aliphatiques (comme c'est le cas dans les exemples présentés ci-après) mais également éventuellement en des ramifications portant des fonctions aromatiques ou cycliques.

A titre d'exemple de composants appartenant à la famille des peroxydes de dialkyle, on peut citer notamment le 2,5-diméthyl-2,5-di(tert-butylperoxy)hexyne-3 (Luperox® 130), le ditert-butyl peroxyde (Luperox® DI), le ditert-amyl peroxide (Luperox^{®} DTA), le tert-butyl cumyl peroxyde (Luperox® 801), le di(tert-butylperoxy-isopropyl)-benzène (Luperox^{®} F et Luperox^{®} 802), le 2,5-diméthyl-2,5 (di(tert-butylperoxy)hexane (Luperox^{®} 101), le dicumyle peroxyde (Luperox^{®} DCP), 3,6,9-triéthyl-3,6,9 triméthyl-1,4,7-triperoxonane (Trigonox® 301) et le 3,3,5,7,7-pentaméthyle-1,2,4-trioxépane (Trigonox® 311). Un mélange de ces peroxydes fait bien entendu également partie de l'invention.

Dans la suite, les exemples de réalisation d'émulsion aqueuse conforme à l'invention comportent toutes du 2,5-diméthyle-2,5-di(tert-butylperoxy)-hexane mais il est bien entendu que d'autres peroxydes de la famille des peroxydes de dialkyle ont été testés et présentent des résultats sensiblement similaires à ceux présentés ici avec ce peroxyde.

S'agissant de l'agent émulsifiant, il consiste en un agent non ionique polyéthoxylé choisi parmi les esters d'acides carboxyliques éthoxylés, les amides éthoxylés, les aminés grasses éthoxylées, les huiles animales, hydrogénées ou non, éthoxylées, les huiles végétales, hydrogénées ou non, éthoxylées, de préférence une huile de ricin comportant de 10 à 20 moles d'oxyde d'éthylène, ou en un mélange d'une telle huile éthoxylée avec un ester de sorbitan, lui-même éthoxylé ou non, les esters de sorbitan éthoxylés, les esters de glycérol éthoxylés, un mélange d'au moins deux esters de sorbitan dont l'un est un ester de sorbitan éthoxylé. Les PVA partiellement hydrolysés et les dérivés celluloses ne peuvent être utilisés seuls dans le cadre de cette invention (en tant qu'agent émulsifiant) mais leur utilisation en tant qu'additifs peut éventuellement être envisagée.

Dans la suite, l'invention est présentée avec principalement au moins un ester sorbitan, ainsi qu'une composition avec de l'huile de ricin, mais il est bien entendu que d'autres émulsifiants non ioniques polyéthoxylés ont été testés et présentent des caractéristiques et propriétés identiques ou sensiblement similaires à celles présentées ici.

Il faut par ailleurs noter qu'au niveau des exemples de compositions selon l'invention, deux agents émulsifiants non ioniques sont présents mais la demanderesse a découvert que les objectifs de l'invention - à savoir en particulier réaliser une émulsion de peroxyde de dialkyle stable dans le temps à température ambiante - sont atteints, ou quasiment atteints, lorsqu'un unique tensioactif non ionique (hors PVA ou dérivé cellulose) est utilisé dans l'émulsion.

Il a été constaté par la demanderesse que des exemples de surfactants satisfaisant aux critères de l'invention sont choisis parmi des alkylphénols éthoxylés, des alcools gras éthoxylés, des esters d'acides carboxyliques éthoxylés, des amides éthoxylés, des amines grasses éthoxylées, des copolymères à blocs éthoxylés propoxylés, des huiles végétales ou animales (hydrogénées ou non) éthoxylées, des esters de sorbitan et/ou esters de sorbitan éthoxylés, des esters de glycérol éthoxylés .

La présente invention présente l'avantage supplémentaire d'offrir à l'application visée le même niveau de performance que le peroxyde de dialkyle utilisé pur.

S'agissant de l'agent antigel, présent de façon optionnelle dans l'émulsion, on peut citer à titre d'exemples les monoalcools, diols et triols tels que le méthanol, l'éthanol, l'éthylène glycol, l'isopropanol, le n-propanol, le propane-1,2-diol, le propane-1,3-diol, le glycérol, le butan-1-ol, le butan-2-ol, le butan-1,3-diol et le butan-1,4-diol et leurs mélanges, ces mélanges comprenant au moins deux des agents anti-gel énumérés précédemment, classiquement l'un de type alcool léger et l'autre de type alcool lourd, avantageusement un mélange de méthanol et de propane-1,2-diol.

L'émulsion selon l'invention peut également comprendre un ou plusieurs additifs fonctionnels destinés à procurer au polymère auquel est ajouté le peroxyde des propriétés/caractéristiques particulières.

Ainsi, s'agissant de l'additif, il peut être choisi parmi les antioxydants ; les agents de protection UV ; les agents de mise en œuvre, ayant pour fonction d'améliorer l'aspect final lors de sa mise en œuvre, telles que les amides grasses, l'acide stéarique et ses sels, l'éthylène bis-stéaramide ou les polymères fluorés ; les agents antibuées ; les agents anti-bloquants tels que la silice ou le talc ; les charges telles que le carbonate de calcium et les nanocharges comme par exemple les argiles ; les agents de couplage tels que les silanes ; les agents réticulants comme les peroxydes ; les agents antistatiques ; les agents nucléants ; les pigments ; les colorants ; les plastifiants ; les fluidifiants et les additifs retardateurs de flamme tels que les hydroxydes d'aluminium ou de magnésium.

L'émulsion aqueuse liquide de peroxyde organique de la présente invention peut éventuellement également contenir des additifs incluant les agents ajusteurs de pH tels que les tampons phosphate et citrate, les agents chélatants, des biocides par exemple des fongicides, des antiozonants, des antioxidants, des antidégradants, des agents gonflants et des agents de démoulage.

L'émulsion aqueuse selon l'invention peut également comprendre des agents ajusteurs de viscosité, tels que des PVA (polyvinyle acétate partiellement hydrolysé) ou dérivés de cellulose.

Enfin, l'émulsion aqueuse liquide de peroxyde organique de la présente invention peut également contenir des additifs habituellement utilisés pour stabiliser le peroxyde organique ou retarder sa décomposition tels que des phlegmatisants (isododécane, huile minérale etc...) ou des hydropéroxydes.

Ces additifs peuvent être ajoutés dans les quantités habituellement utilisées et connues de l'homme de l'art. Ces additifs sont généralement utilisés dans des teneurs comprises entre 10 ppm et 10 000 ppm en poids par rapport au poids de polymère final. Les plastifiants, les fluidifiants et les additifs retardateurs de flamme peuvent atteindre des quantités bien supérieures à 10 000 ppm.

L'invention n'a pas pour objet de définir précisément l'utilisation de l'émulsion, sauf les utilisations mentionnées précisément qui sont celles plus particulièrement visées dans le cadre de la présente invention.

### Exemple de préparation d'une émulsion selon l'invention :

L'exemple de préparation présenté ci-après est conforme à celui ayant permis de réaliser les émulsions testées mais il est bien entendu que l'homme du métier parvient à réaliser les formulations désirées en modifiant les quantités données ci-dessous.

La phase aqueuse contenant l'agent émulsifiant (également dénommé « tensioactif ») ou le mélange d'agents émulsifiants et d'eau est agitée entre 500 et 1000 tpm (tour par minute) et maintenue à 20-22°C (Celsius). Le peroxyde de dialkyle est ajouté progressivement dans le réacteur contenant ce mélange eau/tensioactif(s). L'agitation est maintenue pendant trois minutes à 2000 tpm. L'ensemble est ensuite fortement agité à l'aide d'un appareil de dispersion « Ultraturrax type S-25N 18G » pendant deux minutes à 9500 tpm (tour par minute), puis sous agitation à l'aide d'une pâle à 1000 tpm pendant une minute.

Chaque émulsion se fait sur 200 grammes au total. L'émulsion est stockée dans un flacon en polyéthylène fermé.

### Matières premières utilisés :

Le peroxyde de dialkyle consiste en le Luperox® 101 de la société ARKEMA pur à 95% est le 2,5-diméthyle-2,5-di(tert-butylperoxy) - hexane.

L'eau utilisée est classiquement de l'eau distillée de laboratoire.

Les tensioactifs (émulsifiants) utilisés seront précisés dans chaque exemple.

### Tests réalisés :

La taille des gouttelettes (d₅₀) est déterminée par des moyens conventionnels, bien connus de l'homme du métier, en utilisant la technique de diffraction de la lumière. Le terme d₅₀ correspond au diamètre moyen tel que 50% du volume des gouttelettes de peroxyde organique dans l'émulsion aqueuse présente un diamètre inférieur à d₅₀. Les mesures sont faites en utilisant un dispositif de Malvern Master Sizer 2000® à température ambiante. La taille des gouttelettes d₅₀ est donnée avec une précision de ± 0,5 µm (micromètre).

Les mesures de temps d'écoulement sont réalisées à l'aide de coupes consistométriques selon la norme DIN 53211 (diamètre de la coupe de viscosité : 4 mm), bien connue de l'homme du métier. La mesure se fait sur 100 grammes d'émulsion après conditionnement à + 5°C. Les mesures de temps d'écoulement sont exprimées en secondes et la précision est de ± 10 % de la valeur indiquée. Une valeur inférieure à 50 secondes traduit une émulsion fluide.

Concernant la mesure de déphasage (présence de deux phases) ou non, le stockage des émulsions de peroxydes de dialkyle se fait à une température contrôlée de 20 ± 2°C. Le déphasage visuel mentionné dans les exemples est observé lorsqu'une phase organique de 0,2 mm d'épaisseur est visible à l'œil ou lorsqu'il est possible d'observer une grosse goutte de liquide au fond du flacon (traduisant une inhomogénéité et une instabilité de l'émulsion de peroxyde organique) ou encore lorsque deux phases distinctes apparaissent par séparation de phases. Les émulsions sont observées tous les jours durant la première semaine post-préparation, puis toutes les semaines durant le premier mois post préparation puis une fois par quinzaine (de jours).

### Résultats des tests sur les échantillons :

Dans le tableau 1 ci-dessous sont présentés les résultats de test pour des émulsions non conformes à la définition de l'invention.

Toutes ces émulsions comportent du Luperox® 101 (2,5-diméthyle-2,5-di(tert-butylperoxyhexane) qui représente 60% en poids de l'émulsion, soit une concentration molaire en Luperox® 101 à environ 63% pour toutes ces compositions.

Chacune de ces compositions est définie plus précisément ci-après :
- Composition **1A** : 1,2% en poids de polyvinyle acétate partiellement hydrolysé à 71-73%, Alcotex® 72,5 de chez Synthomer ; HLB (« Hydrophile Lipophile Balance » ou balance hydrophile-lipophile) = 11,5
- Composition **1B** : 2% en poids de polyvinyle acétate partiellement hydrolysé à 88%, Alcotex® 8804 de chez Synthomer ; HLB = 15,8
- Composition **1C** : 2% en poids de polyvinyle acétate partiellement hydrolysé à 54-57%, Alcotex® 552P de chez Synthomer ; HLB = 7,8
- Composition **1D** : 1,2% en poids de carboxymethylcellulose, Blanose 7M1C de chez Ashland Aqualon ;
- Composition **1E** : 1.2% en poids de polyvinyle acétate partiellement hydrolysé à 71-73%, Alcotex® 72,5 et 1% en poids de sodium lauryle sulfate (SLS, Aldrich)
- Composition **1F :** 1,2% de sodium dodecylbenzene sulfate (Aldrich)

**Tableau 1**

| | **1A** | **1B** | **1C** | **1D** | **1E** | **1F** |
|---|---|---|---|---|---|---|
| dso (µm) | 14 | 8,5 | 19,6 | Emulsion non homogène à t=0 | 3,8 | 17 |
| Temps de stockage où le déphasage est observé | 2 jours | 3 jours | 3 jours | | 1 jour | 1 jour |

On notera donc en particulier que les agents émulsifiants testés ici et cités dans les documents US 4440885 et WO 01/32613 ne permettent pas d'obtenir une émulsion stable dans le temps de stockage.

Dans le tableau 1B ci-dessous, sont présentés des résultats de test pour des émulsions de peroxydes organiques réalisées et stockées à température ambiante comportant des surfactants typiquement utilisés dans le cadre des peroxydes organiques polaires (ceux utilisés dans le document WO 2011/015567) pour lesquels la température de réalisation et de stockage de l'émulsion est négative.

Toutes ces émulsions comportent du Luperox® 101 (2,5-diméthyle-2,5-di(tert-butylperoxyhexane) qui représente 60% en poids de l'émulsion, soit une concentration molaire en Luperox® 101 à environ 63% pour toutes ces compositions.

Chacune de ces compositions est définie plus précisément ci-après :
- Composition **1BA:** 0.8% en poids de polyvinyle acétate partiellement hydrolysé à 71-73%, Alcotex® 72,5 de la société Synthomer et 0.8% en poids de Brij® L23 d'Aldrich (lauryl alcool éthoxylé à 23 OE, HLB = 16.9)
- Composition **1BB:** 1.2% en poids de polyvinyle acétate partiellement hydrolysé à 71-73%, Alcotex® 72,5 de la société Synthomer et 0.4% en poids de Brij® L23 d'Aldrich (lauryl alcool éthoxylé à 23 OE, HLB = 16.9)
- Composition **1BC:** 0.8% en poids de polyvinyle acétate partiellement hydrolysé à 71-73%, Alcotex® 72,5 de la société Synthomer et 0.8% en poids de Brij® S100 d'Aldrich (stearyl alcool éthoxylé à 100 OE, HLB = 18)
- Composition **1BD:** 1.2% en poids de polyvinyle acétate partiellement hydrolysé à 71-73%, Alcotex® 72,5 de la société Synthomer et 0.4% en poids de Brij® S100 d'Aldrich (stearyl alcool éthoxylé à 100 OE, HLB = 18)

**Tableau 1B**

| | **1BA** | **1BB** | **1BC** | **1BD** |
|---|---|---|---|---|
| d₅₀ (µm) | 9.7 | 8.1 | 13.9 | 11.5 |
| Temps de | 3 jours | 3 jours | 3 jours | 7 jours |
| stockage où le déphasage est observé | | | | |

On notera que les émulsifiants testés (PVA + alcool gras éthoxylé) ici et entrant dans la composition de l'émulsion de l'exemple 1 du brevet WO2011/015567 ne permettent pas d'obtenir une émulsion de peroxyde de dialkyle dépassant une semaine de stabilité.

Dans le tableau 2 ci-dessous sont présentés les résultats de test pour des émulsions conformes à la définition de l'invention.

Toutes ces émulsions comportent du Luperox® 101 (2,5-diméthyle-2,5-di(tert-butylperoxyhexane) qui représente 60% en poids de l'émulsion, soit une concentration molaire en Luperox® 101 à environ 63% pour toutes ces compositions, sauf la composition 2G qui est à 70% en poids de Luperox® 101.

Chacune de ces compositions est définie plus précisément ci-après :
- Composition **2A** : 0,8% en poids de sorbitan trioléate à 20 moles d'oxyde d'éthylène (Tween 85, HLB= 10,5) et 0.8% en poids de sorbitan monooleate (Span 80, HLB = 4,3) ; HLB global = 7,4
- Composition **2B:** 0,8% en poids de sorbitan monooléate à 20 moles d'oxyde d'éthylène (Tween 80, HLB = 15) et 0.8% en poids de sorbitan monooléate (Span 80, HLB = 4,3) ; HLB global = 9,65
- Composition **2C :** 0,2% en poids de sorbitan monolaurate à 20 moles d'oxyde d'éthylène (Tween 20, HLB= 16,7) et 1.4% en poids de sorbitan monolaurate (Span 20, HLB = 8,6) ; HLB global = 9,6
- Composition **2D** : 1,4% en poids de sorbitan trioléate à 20 moles d'oxyde d'éthylène (Tween 85, HLB = 10,5) et 0,2% en poids de sorbitan monolaurate (Span 80, HLB = 4,3) ; HLB global = 9,7
- Composition **2E** : 0,9% en poids de sorbitan trioléate à 20 moles d'oxyde d'éthylène (Tween 85, HLB = 10,5) et 0.7% de sorbitan monolaurate (Span 20, HLB = 8,6) ; HLB global = 9,7
- Composition **2F :** 1,2% en poids d'huile de ricin éthoxylée à 20 moles d'oxyde d'éthylène (Surfaline® R20, HLB = 9,5) et 1% en poids d'huile de ricin éthoxylée à 12 moles d'oxyde d'éthylène (Decohfix® CO70, HLB = 8,2) ;
- Composition **2G :** émulsion à 70% en poids de Luperox® 101 et 0.8% en poids de sorbitan monooléate à 20 moles d'oxyde d'éthylène (Tween 80, HLB = 15) et 0.8% en poids de sorbitan monooléate (Span 80, HLB = 4,3) ; HLB global = 9,65

**Tableau 2**

| | **2A** | **2B** | **2C** | **2D** | **2E** | **2F** | **2G** |
|---|---|---|---|---|---|---|---|
| Temps d'écoulement (s) | 17 | 17 | 15 | 17 | 14 | 19 | 24 |
| d₅₀ (µm) à t = 0 | 12,0 | 10,4 | 9,1 | 9,8 | 10,0 | 10,0 | 10,2 |
| Temps de stockage où le déphasage est observé | 3,5 mois | ≥ 4 mois | 3,5 mois | 3,5 mois | 3,5 mois | 2,5 mois | 2 mois |
| d₅₀ (µm) à t = 2 mois | 11,0 | 8,6 | 8,0 | 8,2 | 9,3 | 9,8 | 11,8 |

Le tableau 3 ci-dessous présente les résultats pour les compositions 2A, 2B, 2C, 2D et 2E concernant la taille d₅₀ des gouttelettes de façon plus précise dans le temps de stockage.

**Tableau 3**

| | 2A | 2B | 2C | 2D | 2E |
|---|---|---|---|---|---|
| t = 0 d₅₀ (µm) | 12,0 | 10,4 | 9,1 | 9,8 | 10,0 |
| t = 1 mois d₅₀ (µm) | 11,0 | 12,5 | 8,1 | 8,4 | 8,3 |
| t = 2 mois d₅₀ (µm) | 11,0 | 8,6 | 8,0 | 8,2 | 9,3 |
| t = 3 mois d₅₀ (µm) | 11,5 | 8,4 | 8,0 | 7,7 | 9,0 |

## Revendications

1. Emulsion aqueuse de peroxyde de dialkyle consistant en :
- au moins un peroxyde de dialkyle sous forme liquide à température ambiante, représentant entre 10% et 75% en poids de l'émulsion,
- au moins un agent émulsifiant représentant de 0,01 % à 10% en poids de l'émulsion,
- de façon optionnelle, au moins un agent antigel,
- éventuellement au moins un additif fonctionnel,
- de l'eau dont la quantité est déterminée de manière à former le reste de ladite émulsion (100%),
**caractérisée en ce que** l'agent émulsifiant est un tensioactif non ionique polyéthoxylé choisi parmi :
- les esters d'acides carboxyliques éthoxylés,
- les amides éthoxylés,
- les amines grasses éthoxylées,
- les huiles animales, hydrogénées ou non, éthoxylées,
- les huiles végétales, hydrogénées ou non, éthoxylées, de préférence une huile de ricin comportant de 10 à 20 moles d'oxyde d'éthylène, ou en un mélange d'une telle huile éthoxylée avec un ester de sorbitan, lui-même éthoxylé ou non,
- les esters de sorbitan éthoxylés
- les esters de glycérol éthoxylés
- un mélange d'au moins deux esters de sorbitan dont l'un est un ester de sorbitan éthoxylé.

2. Emulsion selon la revendication 1, **caractérisée en ce que** l'agent émulsifiant consiste en au moins un ester de sorbitan éthoxylé.

3. Emulsion selon l'une quelconque des revendications précédentes, **caractérisée en ce que** le peroxyde de dialkyle représente plus de 40% en poids de l'émulsion, de préférence entre 55% et 65% en poids de ladite émulsion.

4. Emulsion selon l'une quelconque des revendications précédentes, **caractérisée en ce que** l'agent émulsifiant représente entre 1% et 3% en poids de l'émulsion.

5. Emulsion selon l'une quelconque des revendications précédentes, **caractérisée en ce que** le peroxyde de dialkyle consiste en le 2,5-diméthyle-2,5-di(tert-butylperoxy)-hexane.

6. Emulsion selon l'a revendication 2, **caractérisée en ce que** le susdit ester de sorbitan consiste en un sorbitan de mono laurate, mono ou tri oléate, mono ou tristéarate et leurs structures éthoxylées.

7. Emulsion selon l'une quelconque des revendications 2 ou 5, **caractérisée en ce que** l'ester de sorbitan éthoxylé présente un degré d'éthoxylation inférieur ou égal à 20 moles d'oxyde d'éthylène.

8. Procédé de préparation de l'émulsion aqueuse selon l'une quelconque des revendications précédentes, **caractérisé en ce qu'**il comprend les étapes de :
- dispersion et homogénéisation dans l'eau de l'agent émulsifiant, puis
- ajout du peroxyde de dialkyle dans l'émulsion aqueuse, puis
- le mélange ainsi constitué est émulsionné au cours d'une étape d'émulsion à température inférieure à 30°C, préférentiellement à une température comprise entre 18°C et 25°C.

9. Utilisation de l'émulsion aqueuse selon l'une quelconque des revendications 1 à 7, pour :
- la réticulation d'élastomères, ou
- la polymérisation de dérivés d'éthylène ou de monomères acryliques seuls ou avec d'autres monomères.

## Patentansprüche

1. Wässrige Dialkylperoxidemulsion, bestehend aus:
- mindestens einem Dialkylperoxid in bei Umgebungstemperatur flüssiger Form, das zwischen 10 und 75 Gew.-% der Emulsion ausmacht,
- mindestens einem Emulgator, der 0, 01 bis 10 Gew.-% der Emulsion ausmacht,
- gegebenenfalls mindestens einem Frostschutzmittel,
- gegebenenfalls mindestens einem funktionalen Additiv,
- Wasser, dessen Menge so bestimmt ist, dass sie den Rest der Emulsion (100 %) bildet,
**dadurch gekennzeichnet, dass** es sich bei dem Emulgator um ein polyethoxyliertes nichtionisches Tensid handelt, das aus
- ethoxylierten Carbonsäureestern,
- ethoxylierten Amiden,
- ethoxylierten Fettaminen,
- gegebenenfalls hydrierten ethoxylierten tierischen Ölen,
- gegebenenfalls hydrierten ethoxylierten pflanzlichen Ölen, vorzugsweise einem Rizinusöl mit 10 bis 20 mol Ethylenoxid, oder einer Mischung eines derartigen ethoxylierten Öls mit einem Sorbitanester, der gegebenenfalls selbst ethoxyliert ist,
- ethoxylierten Sorbitanestern,
- ethoxylierten Glycerinestern,
- einer Mischung von mindestens zwei Sorbitanestern, von denen einer ein ethoxylierter Sorbitanester ist, ausgewählt ist.

2. Emulsion nach Anspruch 1, **dadurch gekennzeichnet, dass** der Emulgator aus mindestens einem ethoxylierten Sorbitanester besteht.

3. Emulsion nach einem der vorhergehenden Ansprüche, **dadurch gekennzeichnet, dass** das Dialkylperoxid mehr als 40 Gew.-% der Emulsion, vorzugsweise zwischen 55 und 65 Gew.-% der Emulsion, ausmacht.

4. Emulsion nach einem der vorhergehenden Ansprüche, **dadurch gekennzeichnet, dass** der Emulgator zwischen 1 und 3 Gew.-% der Emulsion ausmacht.

5. Emulsion nach einem der vorhergehenden Ansprüche, **dadurch gekennzeichnet, dass** das Dialkylperoxid aus 2,5-Dimethyl-2,5-di(tert.-butylperoxy)hexan besteht.

6. Emulsion nach Anspruch 2, **dadurch gekennzeichnet, dass** der oben erwähnte Sorbitanester aus einem Sorbitanmonolaurat, -mono- oder -trioleat, -mono- oder -tristearat und deren ethoxylierten Strukturen besteht.

7. Emulsion nach einem der Ansprüche 2 oder 5, **dadurch gekennzeichnet, dass** der ethoxylierte Sorbitanester einen Ethoxylierungsgrad kleiner oder gleich 20 mol Ethylenoxid aufweist.

8. Verfahren zur Herstellung einer wässrigen Emulsion nach einem der vorhergehenden Ansprüche, **dadurch gekennzeichnet, dass** es folgende Schritte umfasst:
- Dispergieren und Homogenisieren des Emulgators in Wasser, dann
- Zugeben des Dialkylperoxids zu der wässrigen Emulsion, dann
- Emulgieren der so hergestellten Mischung im Lauf eines Emulgierschritts bei einer Temperatur von weniger als 30 °C, vorzugsweise bei einer Temperatur zwischen 18 °C und 25 °C.

9. Verwendung der wässrigen Emulsion nach einem der Ansprüche 1 bis 7 zur
- Vernetzung von Elastomeren oder
- Polymerisation von Ethylenderivaten oder Acrylmonomeren alleine oder mit anderen Monomeren.

## Claims

1. Aqueous emulsion of dialkyl peroxide consisting of:
- at least one dialkyl peroxide in liquid form at room temperature, representing between 10% and 75% by weight of the emulsion,
- at least one emulsifier representing from 0.01% to 10% by weight of the emulsion,
- optionally, at least one antifreeze agent,
- optionally, at least one functional additive,
- water, the amount of which is determined so as to form the rest of said emulsion (100%),
**characterized in that** the emulsifier is a polyethoxylated non-ionic surfactant chosen from:
- ethoxylated carboxylic acid esters,
- ethoxylated amides,
- ethoxylated fatty amines,
- hydrogenated or non-hydrogenated, ethoxylated animal oils,
- hydrogenated or non-hydrogenated, ethoxylated plant oils, preferably a castor oil comprising from 10 to 20 mol of ethylene oxide, or a mixture of such an ethoxylated oil with a sorbitan ester, which is itself optionally ethoxylated,
- ethoxylated sorbitan esters,
- ethoxylated glycerol esters,
- a mixture of at least two sorbitan esters, one of which is an ethoxylated sorbitan ester.

2. Emulsion according to Claim 1, **characterized in that** the emulsifier consists of at least one ethoxylated sorbitan ester.

3. Emulsion according to either one of the preceding claims, **characterized in that** the dialkyl peroxide represents more than 40% by weight of the emulsion, preferably between 55% and 65% by weight of said emulsion.

4. Emulsion according to any one of the preceding claims, **characterized in that** the emulsifier represents between 1% and 3% by weight of the emulsion.

5. Emulsion according to any one of the preceding claims, **characterized in that** the dialkyl peroxide consists of 2,5-dimethyl-2,5-di(tert-butylperoxy)hexane.

6. Emulsion according to Claim 2, **characterized in that** the abovementioned sorbitan ester consists of a monolaurate, monooleate, trioleate, monostearate or tristearate, and the ethoxylated structures thereof.

7. Emulsion according to either one of Claims 2 and 5, **characterized in that** the ethoxylated sorbitan ester has a degree of ethoxylation of less than or equal to 20 mol of ethylene oxide.

8. Process for preparing the aqueous emulsion according to any one of the preceding claims, **characterized in that** it comprises the steps of:
- dispersing and homogenizing the emulsifier in water, and then
- adding the dialkyl peroxide to the aqueous emulsion, and then
- emulsifying the mixture thus made during an emulsification step at a temperature below 30°C, preferentially at a temperature of between 18°C and 25°C.

9. Use of the aqueous emulsion according to any one of Claims 1 to 7, for:
- the crosslinking of elastomers, or
- the polymerization of ethylene derivatives or acrylic monomer derivatives alone or with other monomers.
